# EUROPÄISCHE PATENTANMELDUNG

(11) **EP 0 792 905 A2**
(43) Veröffentlichungstag der Anmeldung: **03.09.1997**
(21) Anmeldenummer: 97102470.8
(22) Anmeldetag: 15.02.1997
(51) Int. Cl.: C08J 3/28, C08J 3/20

(54) **Kontinuierliches Verfahren zur Herstellung von Polypropylengemischen erhöhter Spannungsrissbeständigkeit und Schmelzefestigkeit**

(30) Priorität: 28.02.1996 DE 19607480
(71) Anmelder: PCD-Polymere Gesellschaft m.b.H., A-4021 Linz (AT)
(72) Erfinder: Rätzsch, Manfred, Prof. Dr., 4202 Kirchschlag (AT); Hesse, Achim, Dr., 4020 Linz (AT); Bucka, Harmut, 4622 Eggendorf (AT); Reichelt, Norbert, Dr., 4501 Neuhofen (AT); Panzer, Ulf, Dr., 4320 Perg (AT); Mehnert, Reiner, Prof. Dr., 04416 Markkleeberg (DE)
(74) Vertreter: Schinke, Herbert, Dr. Dr., Patentanwaltskanzlei

(57) **Zusammenfassung**

Polypropylengemische erhöhter Spannungsrißbeständigkeit und Schmelzefestigkeit lassen sich durch Bestrahlung von Polypropylenpulvern mit niedrigen mittleren Korndurchmessern durch Niederenergieelektronenbeschleuniger mit Energien von 15o bis 3oo keV herstellen.

Die hergestellten Polypropylengemische sind zur Erzeugung von Folien, Fasern, Platten, Beschichtungen, Rohren , Hohlkörpern und Schaumstoffen geeignet.

## Beschreibung

Die Erfindung betrifft ein Verfahren zur Herstellung von Polypropylengemischen erhöhter Spannungsrißbeständigkeit und Schmelzefestigkeit durch Einwirkung ionisierender Strahlung.

Es ist bekannt, eine Vernetzung, Teilvernetzung und Modifizierung von Polypropylen unter Einwirkung von Gammabestrahlung oder durch Einsatz von Elektronenbeschleunigern mit Energien von o,5 MeV bis 1o MeV vorzunehmen. Zusätze von 2 bis 3 % an Elektronen-bestrahltem Polypropylen zu nichtmodifiziertem Polypropylen wirken als Nukleierungsmittel für Polypropylen , erhöhen dadurch die Kristallisationstemperatur und verkürzen die Kristallisationszeit, was zu einem erhöhtem Kristallinitätsgrad, einer erhöhten Dichte und einem höheren Elastizitätsmodul führt [Menges, D., Kunststoffe 73(1983)5, 258-26o; Lee, D., Kunststoffe 81(1991)7, 6o9-613; Kirch, D., Plastverarbeiter 37(1986)1o, 1oo - 106].

Weiterhin ist bekannt, durch Behandlung von Polypropylen mit hochenergetischer ionisierender Strahlung durch Elektronenbeschleuniger mit Energien von 5oo bis 4ooo keV und Bestrahlungsdosen von 1 bis 9 Mrad unter vorwiegend inerten Bedingungen und nachfolgender Wärmebehandlung modifizierte Polypropylene mit freier Langkettenverzweigung herzustellen ( DE 3688258, EP 0190889, DE o634441, DE 0351866, US 4916198, US 5047446). Bekannt ist ebenfalls, Mischungen dieser modifizierten verzweigten Polypropylene mit nichtmodifizierten Polypropylenen zur Herstellung von Folien, Platten und Beschichtungen einzusetzen (EP 0634454).

Von Nachteil bei der Modifizierung von Polypropylen mit hochenergetischer ionisierender Strahlung durch Elektronenbeschleuniger mit Energien über 5oo keV ist der hohe sicherheitstechnische Aufwand für die biologische Abschirmung der hochenergetischen Strahlung, der eine aufwendige Hermetisierung der Bestrahlungskammer durch dicke Betonwände oder Bleisegmentkonstruktionen , eine aufwendige Strahlenschutzmeßtechnik sowie eine medizinische Überwachung des Bedienpersonals erforderlich macht. Bei Mischungen aus modifizierten und nichtmodifizierten Polypropylenen besteht bei der bisherigen Technologie ein weiterer Nachteil darin, daß für die Herstellung der Mischungen ein zusätzlicher Verfahrensschritt erforderlich ist.

Das Ziel der Erfindung bestand in der Entwicklung eines kontinuierlichen Verfahrens zur Herstellung von Polypropylengemischen erhöhter Spannungsrißbeständigkeit und Schmelzefestigkeit, das keine erhöhten sicherheitstechnischen Aufwendungen erfordert und bei dem für die Mischungsherstellung kein zusätzlicher Verfahrensschritt erforderlich ist.

Überraschenderweise zeigte es sich, daß bei Einsatz sehr feinteiliger Polypropylenpulver und Anwendung niederenergetischer Elektronenbeschleuniger trotz der sehr geringen Eindringtiefe der Elektronen mit niedriger Energie Mischungen aus nichtmodifizierten und modifizierten Polypropylenpulverpartikeln resultieren, die die Anforderungen an Polypropylengemische erhöhter Spannungsrißbeständigkeit und Schmelzefestigkeit erfüllen.

Gegenstand der Erfindung ist daher ein kontinuierliches Verfahren zur Herstellung von Polypropylengemischen erhöhter Spannungsrißbeständigkeit und Schmelzefestigkeit , bei dem Polypropylenpulvern mit einem mittleren Korndurchmesser von o,o1 bis o,5 mm unter inerten Bedingungen und intensiver Durchmischung eine niederenergetische Bestrahlung durch Niederenergieelektronenbeschleuniger mit einer Energie von 15o bis 3oo keV bei einer Bestrahlungsdosis von 0,05 bis 12 Mrd, vorzugsweise 0,5 bis 12 Mrd, bei 2o bis 15o°C appliziert wird, wobei den Polypropylenpulvern vor und/oder nach der Bestrahlung zusätzlich o,o5 bis 2,5 Masse% Stabilisatoren, 0,1 bis 1 Masse% Antistatika, 0,1 bis 3 Masse% Pigmente, gegebenenfalls 0,05 bis 5 Masse% bifunktionell ungesättigte Monomere, 0,05 bis 1 Masse% Nukleierungsmittel, 5 bis 4o Masse% Füll- und/oder Verstärkerstoffe, 2 bis 2o Masse% Flammschutzmittel und/oder o,o1 bis 1 Masse% Verarbeitungshilfsmittel zugesetzt werden können.

Niederenergieelektronenbeschleuniger mit Energien von 15o bis 3oo keV haben lediglich eine Eindringtiefe des Elektronenstrahls von max. o,4 mm. Um bei der Bestrahlung von Polypropylen einen Modifizierungseffekt zu erzielen, ist es erforderlich, feinteilige Polypropylenpulver mit mittleren Korndurchmessern von o,o1 bis o,5 mm, bevorzugt von o,o5 bis 0,2 mm, einzusetzen.

Die Vorteile der geringen Eindringtiefe in Bezug auf die sicherheitstechnischen Anforderungen bestehen darin, daß diese Niederenergiebeschleuniger nur einen geringen Aufwand für die biologischen Abschirmungsmaßnahmen erfordern, da der Elektronenstrahl von dem normalen Apparategehäuse absorbiert wird. Aus diesem Grund ist ebenfalls keine spezielle Strahlenschutzmeßtechnik und keine medizinische Übenwachung des Bedienungspersonals erforderlich. Der bevorzugte Beschleunigertyp für Energien von 15o bis 3oo keV sind Niederenergieelektronenbeschleuniger vom Bandstrahlertyp .

Die erfindungsgemäß eingesetzten Polypropylenpulver bestehen bevorzugt aus Polypropylen-Homopolymeren, statistischen Propylen-Copolymeren, Propylen-Blockcopolymeren, statistischen Propylen - Blockcopolymeren und/oder elastomeren Polypropylenen.

Die intensive Durchmischung der pulverförmigen Mischungen wahrend der Applikation der ionisierenden Strahlung wird bevorzugt durch den Einsatz von Kassettenreaktoren mit Vibrationseinrichtung , in denen der Stofftransport durch inerte Medien erfolgt, erzielt.

Die vor und/oder nach der Bestrahlung der Polypropylenpulver zugesetzten Stabilisatoren sind bevorzugt Mischungen aus 0,01 bis 0,6 Masse% phenolischen Antioxidantien, 0,01 bis 0,6 Masse% Hochtemperaturstabilisatoren auf Basis von Disulfiden und Polyäthern, 0,01 bis 0,6 Masse% Verarbeitungsstabilisatoren auf Basis von Phosphiten und/oder 0,01 bis 0,8 Masse% sterisch gehinderten Aminen (HALS).

Geeignete phenolische Antioxidantien sind 2-tert.Butyl-4,6- dimethylphenol, 2,6-Di-tert.butyl-4-methylphenol, 2,6-Di-tert.butyl-4-isoamylphenol, 2,6-Di-tert.butyl-4-ethylphenol, 2-tert.Butyl-4,6-diisopropylphenol, 2,6-Dicyclopentyl-4-methylphenol, 2,6-Di-tert.butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis-(6-tert.butyl-4-methylphenol), 4,4'-Thio-bis-(6-tert.butyl-2-methylphenol), 3-(3,5-Di-tert.butyl-4-hydroxyphenyl)propionsäureoctadecylester, 1,3,5-Trimethyl-2,4,6-tris-(3',5'-di-tert.butyl-4-hydroxybenzyl)benzen und/oder Pentaerythritol- tetrakis[3-(3,5-di-tert.butyl-4-hydroxyphenyl)]propionat.

Als HALS-Verbindungen sind Bis-2,2,6,6-tetramethyl-4-piperidylsebazat und/oder Poly- ([1,- 1,3,3,-tetramethylbutyl)-imino]- 1,3,5-triazin-2,4,diyl)[2,2,6,6,-tetramethylpiperidyl)-amino]-hexamethylen-4-(2,2,6,6-tetramethyl)piperidyl)-imino] besonders geeignet.

Weiterhin können vor und/oder nach der Bestrahlung mineralische und/oder organische Füll- oder Verstärkungsstoffe wie Talkum, Kreide, Glimmer, Wollastonit, Glas-, Kohle-, Aramid- oder Keramikfasern, weitere synthetische Fasern oder Cellulosefasern zugesetzt werden.

Geeignete Verarbeitungshilfsmittel sind Calciumstearat, Magnesiumstearat und/oder Wachse .

Der Zusatz von o,o5 bis 2,5 Masse% Stabilisatoren, 0,1 bis 1 Masse% Antistatika, 0,1 bis 3 Masse% Pigmenten, 0,05 bis 1 Masse% Nukleierungsmitteln, 5 bis 4o Masse% Füll - und/oder Verstärkerstoffen, 2 bis 2o Masse% Flammschutzmitten und/oder o,o1 bis 1 Masse% Verarbeitungshilfsmitteln zu den Polypropylenpulvern nach der Bestrahlung erfolgt bevorzugt in Wirbelschichtreaktoren bei 120 bis 150°C und Verweilzeiten von 5 bis 60 Minuten oder in Extrudern bei 170 bis 280°C bei Verweilzeiten von 2 bis 8 Minuten.

Als bifunktionell ungesättigte Monomere, die vor und/oder während der Bestrahlung zugesetzt werden können, sind bevorzugt alle aus Gasphase sorbierbaren bifunktionell ungesättigten monomeren Verbindungen einsetzbar, die mit Hilfe von freien Radikalen polymerisierbar sind. Bevorzugt angewandt werden folgende bifunktionell ungesättigten Monomere in Anteilen von bevorzugt 0,05 bis 2 Masse%, bezogen auf die eingesetzten Polypropylene :
- Divinylverbindungen wie Divinylanilin, m-Divinylbenzen, p-Divinylbenzen, Divinylpentan und/oder Divinylpropan;
- Allylverbindungen wie Allylacrylat, Allylmethacrylat, Allylmethylmaleat und/oder Allylvinylether;
- Diene wie Butadien, Chloropren, Cyclohexadien, Cyclopentadien, 2,3-Dimethylbutadien, Heptadien, Hexadien, Isopren, und/oder 1,4-Pentadien ;
- Mischungen dieser ungesättigten Monomeren.

Bei einer bevorzugten Variante des erfindungsgemäßen Verfahrens werden die vor der niederenergetischen Bestrahlung zugesetzten 0,05 bis 2 Masse% leichtflüchtigen bifunktionellen Monomere vor und/oder während der niederenergetischen Bestrahlung der Polypropylenpulver mit 0,05 bis 2 Mrd durch die Polypropylenpulver aus Gasphase sorbiert. Dabei wird als bifunktionelles Monomer besonders bevorzugt Butadien eingesetzt.

Der Modifizierungseffekt wird durch Ermittlung der Spannungsrißbeständigkeit und der Schmelzefestigkeit charakterisiert.

Die Spannungsrißbeständigkeit wird durch Exposition spritzgegossener Prüfkörper unter einer Belastung von 9 N/mm² in 5% Levantinlösung ermittelt.

Die Schmelzefestigkeit wird durch die Messung des Schwellwerts (Strangdurchmesser der modifizierten Polypropylenpulvermischung/Strangdurchmesser des nichtmodifizierten Polypropylenpulvers bei der Schmelzindexbestimmung nach ISO 1131) bestimmt.

Die erfindungsgemäß hergestellten Polypropylengemische sind insbesondere zur Erzeugung von Folien, Platten, Beschichtungen, Rohren, Hohlkörpern und Schaumstoffen geeignet.

Die Erfindung wird durch nachfolgende Beispiele erläutert:

### Beispiel 1

Im Innenmischer wird auf ein pulverförmiges Polypropylen-Homopolymer (Schmelzindex o,9 g/10 Min. bei 230°C/21,19 N, mittlerer Korndurchmesser o,2mm) o,15 Masse% 2,6-Dicyclopentyl-4-methylphenol und 0,15 Masse% Bis-2,2,6,6-tetramethyl-4-piperidylsebazat aufgetrommelt und das Gemisch durch Inertgas pneumatisch in einen Kassettenreaktor o,2o x 3,5o m mit 4 integrierten Kathoden eines Niederenergiebeschleunigers vom Bandstrahlertyp (Energie 25o keV, Strahlleistung 4 x 1o KW ) und integrierter Vibrationseinrichtung gefördert, der Durchsatz bei einer Bestrahlungstemperatur von 85°C beträgt 3,1 kg/Minute.
Die bestrahlte pulverförmige Mischung wird in einem Werner&Pfleiderer - Doppelschneckenextruder ZSK 82 unter inerten Bedingungen bei 235°C granuliert. Das modifizierte Polypropylengemisch besitzt eine Spannungsrißbeständigkeit von 2o5 Stunden und einen Schwellwert von 1,45.

### Beispiel 2

In einen Kassettenreaktor mit Bestrahlungseinrichtung nach Beispiel 1 wird ein statistisches Polypropylen-Copolymer (Ethylengehalt 6 Masse%, Schmelzindex 2,2g/1o Min. bei 230°C/ 21,19 N, mittlerer Korndurchmesser o,31 mm) durch einen Trägergasstrom aus Reinststickstoff pneumatisch gefördert, der Durchsatz der wirbelnden Schüttgutschicht bei einer Bestrahlungstemperatur von 1o5°C beträgt 1,8 kg/Minute. Das bestrahlte pulverförmige Gemisch wird in einen Wirbelschichtreaktor überführt und unter Zusatz von o,2 Masse% 4,4' - Thio-bis-(6-tert.butyl-2-methyl-phenol) und o,15 Masse% Poly-([1,1,3,3,-tetramethylbutyl)-imino] -1,3,5-triazin-2,4-diyl)[2,2,6,6-tetra-methylpiperidyl) -amino] - hexamethylen - 4 - (2,2,6,6 - tetra - methyl)-piperidyl)-imino] bei 130°C und einer Verweilzeit von 4o Min. homogenisiert. Das modifizierte Gemisch besitzt eine Spannungsrißbeständigkeit von 225 Stunden und einen Schwellwert von 1,30 .

### Beispiel 3

In einen Kassettenreaktor mit Bestrahlungseinrichtung nach Beispiel 1 wird eine 1:1-Mischung aus einem pulverförmigen Polypropylen-Homopolymer (Schmelzindex o,9 g/10 Min. bei 230°C/21,19 N, mittlerer Korndurchmesser o,2mm) und einem statistischen Polypropylen-Copolymer (Ethylengehalt 6 Masse%, Schmelzindex 2,2g/1o Min. bei 230°C/21,19 N, mittlerer Korndurchmesser o,31 mm) durch einen Trägergasstrom aus Reinststickstoff pneumatisch gefördert, der Durchsatz der wirbelnden Schüttgutschicht bei einer Bestrahlungstemperatur von 95°C beträgt 0,8 kg/Minute. Die Mischung wird unter Zusatz von o,15 Masse% 2,6-Di-tert.butyl-4-methoxymethylphenol, 0,15 Masse% Bis-2,2,6,6-tetramethyl-4-piperidylsebazat, o,3 Masse% Ruß und o,3 Masse% Behensäure in einem Werner&Pfleiderer - Doppelschneckenextruder ZSK 82 unter inerten Bedingungen bei 225°C (Verweilzeit 5,1 Min.) homogenisiert. Das modifizierte Gemisch besitzt eine Spannungsrißbeständigkeit von 265 Stunden und einen Schwellwert von 1,6o .

### Beispiel 4

In einen Kassettenreaktor mit Bestrahlungseinrichtung nach Beispiel 1 wird ein statistisches Polypropylen-Copolymer (Ethylengehalt 6 Masse%, Schmelzindex 2,2g/1o Min. bei 230°C/ 21,19 N, mittlerer Korndurchmesser o,31mm) durch einen Trägergasstrom aus 95 Vol.% Reinststickstoff und 5 Vol.% Butadien pneumatisch gefördert, der Durchsatz der wirbelnden Schüttgutschicht bei einer Bestrahlungstemperatur von 100°C beträgt 6,8 kg/Minute. Das bestrahlte pulverförmige Gemisch wird in einen Wirbelschichtreaktor überführt und unter Zusatz von o,2 Masse% 4,4' - Thio-bis-(6-tert.butyl-2-methyl-phenol) und o,15 Masse% Poly-([1,1,3,3,-tetramethylbutyl)-imino] -1,3,5-triazin-2,4-diyl)[2,2,6,6-tetra-methylpiperidyl) -amino] - hexamethylen - 4 -(2,2,6,6 - tetramethyl)-piperidyl)-imino] bei 125°C und einer Verweilzeit von 35 Min. homogenisiert. Das modifizierte Gemisch besitzt eine Spannungsrißbeständigkeit von 235 Stunden und einen Schwellwert von 1,5o .

## Patentansprüche

1. Kontinuierliches Verfahren zur Herstellung von Polypropylengemischen erhöhter Spannungsrißbeständigkeit und Schmelzefestigkeit, dadurch gekennzeichnet, daß Polypropylenpulvern mit einem mittleren Korndurchmesser von o,o1 bis o,5 mm unter inerten Bedingungen und intensiver Durchmischung eine niederenergetische Bestrahlung durch Niederenergieelektronenbeschleuniger mit einer Energie von 15o bis 3oo keV bei einer Bestrahlungsdosis von 0,05 bis 12 Mrd, bevorzugt 0,5 bis 12 Mrd, bei 2o bis 15o°C appliziert wird, wobei den Polypropylenpulvern vor und/oder nach der Bestrahlung zusätzlich o,o5 bis 2,5 Masse% Stabilisatoren, 0,1 bis 1 Masse% Antistatika, 0,1 bis 3 Masse% Pigmente, gegebenenfalls 0,05 bis 5 Masse% bifunktionell ungesättigte Monomere, 0,05 bis 1 Masse% Nukleierungsmittel, 5 bis 4o Masse% Füll- und/oder Verstärkerstoffe, 2 bis 2o Masse% Flammschutzmittel und/oder o,o1 bis 1 Masse% Verarbeitungshilfsmittel zugesetzt werden können.

2. Kontinuierliches Verfahren zur Herstellung von Polypropylengemischen erhöhter Spannungsrißbeständigkeit und Schmelzefestigkeit nach Anspruch 1, dadurch gekennzeichnet, daß vor und/oder während der niederenergetischen Bestrahlung der Polypropylenpulver mit 0,05 bis 2 Mrd eine Sorption der zugesetzten 0,05 bis 2 Masse% leichtflüchtigen bifunktionellen Monomeren, bevorzugt Butadien, erfolgt.

3. Anwendung der hergestellten Polypropylengemische nach Anspruch 1 und 2 zur Erzeugung von Folien, Fasern, Platten, Beschichtungen, Rohren, Hohlkörpern und Schaumstoffen.
